# EUROPÄISCHE PATENTANMELDUNG

(11) **EP 0 741 093 A2**
(43) Veröffentlichungstag der Anmeldung: **06.11.1996**
(21) Anmeldenummer: 96106231.2
(22) Anmeldetag: 20.04.1996
(51) Int. Cl.: B65G 67/60

(54) **Vorrichtung zum Beladen von Schiffen mit Losgut**

(30) Priorität: 05.05.1995 DE 19516471
(71) Anmelder: PWH Anlagen + Systeme GmbH, D-66386 St. Ingbert-Rohrbach (DE)
(72) Erfinder: Arend, Jürgen, 66123 Saarbrücken (DE); Steckel, Horst, 66386 St. Ingbert (DE)

(57) **Zusammenfassung**

Bei einer Vorrichtung zum Beladen von Schiffen (1) mit Losgut, die ein parallel zu dem Schiff (1) verfahrbares Portal (2) mit einem darauf angeordneten Ausleger (3) aufweist, wird das Losgut von einem Beschickungsband (4) - das mittels eines Bandschleifenwagens (6) angehoben wird - auf das Auslegerband (5) befördert. Von dort wird das Losgut über eine Beladeschurre (7) in das Schiff (1) geleitet. Der Ausleger (3) als mit einer Überspannung (8) versehenes Rohr ausgebildet, wobei in dem den Ausleger (3) bildenden Rohr das als Muldengleitförderer ausgebildete Auslegerband (5) angeordnet ist. Der Innenraum des Auslegers (3) mit einem Zwischenboden (16) versehen ist, auf den sich der Obergurt (5.O) des Auslegerbandes (5) abstützt, während der Untergurt (5.U) des Auslegerbandes (5) auf der Unterseite des Innenraums des Auslegers (3) gleitet.

## Beschreibung

Die Erfindung betrifft eine Vorrichtung zum Beladen von Schiffen mit Losgut, die ein parallel zu dem Schiff verfahrbares Portal mit einem darauf angeordneten Ausleger aufweist, wobei das Losgut von einem Beschickungsband - das mittels eines Bandschleifenwagens angehoben wird - auf das Auslegerband befördert und von dort über eine Beladeschurre in das Schiff geleitet wird.

Zum Beladen von Schiffen mit Losgut werden entsprechend den jeweiligen Einsatzbedingungen in Abhängigkeit von den örtlichen Gegebenheiten, der Beschaffenheit des Losgutes und sonstigen Parametern unterschiedliche Geräte eingesetzt. Es sind vornehmlich drei Gerätetypen bekannt:
- Das Teleskopgerät; mit starrem, heb-, senk- und teleskopierbarem Ausleger.
- Das Drehgerät; mit drehbarem, heb- und senkbarem Ausleger.
- Das kombinierte Teleskop-Dreh-Gerät; mit drehbarem, heb-, senk- und teleskopierbarem Ausleger.

Alle diese Gerätetypen haben einen ähnlichen Aufbau. Sie bestehen in der Regel aus einem meist fahrbaren Stützgerüst, dem an das Stützgerüst angehängten Bandschleifenwagen, dem heb- und senkbaren und je nach Gerätetyp teleskopierbaren und/oder drehbaren Ausleger mit Förderelement, der Hubwinde für den Ausleger sowie der Beladeeinrichtung in Form einer heb- und senkbaren Beladeeinrichtung unterschiedlichster Art. Die Zufuhr des Losgutes erfolgt über einen parallel zum Kai verlaufenden Gurtförderer, der durch den mit dem Gerät verbundenen, und somit mitfahrenden Bandschleifenwagen bis zur Übergabehöhe des Auslegerförderers entsprechend angehoben wird und das Losgut dem Auslegerförderer übergibt.

In der Regel ist der Auslegerförderer als Gurtband ausgebildet. Lediglich bei feinkörnigem und somit staubhaltigem Losgut werden verschiedendlich andere Förderelemente, beispielsweise Förderschnecken, Luftförderrinnen o. dgl., eingesetzt.

Aus Sicherheits- wie auch insbesondere aus Umweltschutzgründen wird das von dem Auslegerband in das Schiff zu ladende Losgut mittels einer teleskopierbaren Schurre umhüllt und nach unten geführt. Bei staubigem Losgut wird die Beladeschurre so ausgebildet, daß entweder eine pneumatisch arbeitende Entstaubungsanlage die im Aufprallbereich und innerhalb der Beladeschurre befindliche staubhaltige Luft absaugt und filtert, oder aber, daß eine Staubunterdrückungsvorrichtung unterschiedlichster Art am Schurrenauslauf angebracht ist.

Der Erfindung liegt die Aufgabe zugrunde, eine Vorrichtung zu schaffen, die für möglichst alle Einsatzfälle, unabhängig von den Eigenschaften des zu fördernden Losgutes und unter Berücksichtigung der Umweltauflagen insbesondere bei stark staubenden Gütern, eingesetzt werden kann.

Die Lösung der gestellten Aufgabe besteht bei einer Vorrichtung der eingangs erwähnten Art darin,
- daß der Ausleger als mit einer Überspannung versehenes Rohr ausgebildet ist,
- daß in dem den Ausleger bildenden Rohr das als Muldengleitförderer ausgebildete Auslegerband angeordnet ist
- und daß der Innenraum des Auslegers mit einem Zwischenboden versehen ist, auf den sich der Obergurt des Auslegerbandes abstützt, während der Untergurt des Auslegerbandes auf der Unterseite des Innenraums des Auslegers gleitet.

Dadurch, daß das Auslegerband im Innenraum des Auslegers angeordnet ist, kann unabhängig von den Eigenschaften des zu fördernden Losgutes als Auslegerband stets ein Gurtförderer verwendet werden, weil wegen der vollständigen Umhüllung des Auslegerbandes kein Staubaustritt möglich ist. Das den Ausleger bildende überspannte Rohr, das einen runden, aber auch einen eckigen Querschnitt haben kann, ist selbsttragend, so daß keine Unterstützungskonstruktion erforderich ist. Durch die genannten Eigenschaften wird eine Standardisierung der erfindungsgemäßen Vorrichtung ermöglicht. Darüber hinaus wird durch die Anordnung des Auslegerbandes im Innenraum des Auslegers ein Schutz des zu fördernden Losgutes vor Witterungseinflüssen erreicht.

Bei der erfindungsgemäßen Vorrichtung ist - anders als bei bekannten Gleitförderern, bei denen nur der Obergurt eines Förderbandes gleitend in einem Tragrohr geführt ist, der Untergurt aber über Rollen unterhalb des Tragrohres zurückgeführt wird - das gesamte Auslegerband in dem rohrförmigen Ausleger angeordnet. Somit kann von dem Auslegerband keine Staubbelastung der Umwelt mehr ausgehen. Durch den Wegfall der sonst notwendigen Rollenstühle ergibt sich ferner eine erhebliche Gewichtsverminderung. Die auftretenden Reibwerte liegen im Rahmen der bei Rollenstühlen üblichen Widerstände, weil die Walkarbeit entfällt.

In Ausgestaltung der Erfindung sind in dem Innenraum des Auslegers zwischen dem Obergurt des Auslegerbandes und dem Zwischenboden einerseits, sowie zwischen dem Untergurt und der Unterseite des Innenraums des Auslegers andererseits auswechselbare Gleitleisten vorgesehen. Dadurch wird eine Reibabnutzung des Rohres verhindert und gleichzeitig der Reibwiderstand gemindert. Außerdem können verschlissene Gleitleisten problemlos ausgewechselt werden.

In weiterer Ausgestaltung der Erfindung ist der Ausleger heb- und senkbar ausgebildet, wobei das Heben und Senken des Auslegers durch einen mittels eines Hydraulikzylinders verstellbaren Kniehebel bewirkt wird. Gegenüber den sonst üblichen Seilen mit Windwerk wird durch die vorgenannte Ausgestaltung der Vorrichtung mit verhältnismäßig kleinem Zylinderweg eine verhältnismäßig große Auslegerbewegung bewirkt, bis in die fast senkrecht nach oben gerichtete Ruhestellung.

Nach einem anderen Merkmal der Erfindung ist der Drehpunkt des Auslegers für dessen Heb- und Senkbewegung mittig über dem Beschickungsband angeordnet, so daß die Auslegerspitze mit der Beladeschurre im Rahmen des vorgegebenen Auslegerschwenkwinkels den in diesem Fall größtmöglichen Schwenkweg zurücklegen kann.

Bei einer bevorzugten Ausführungsform der Erfindung ist die Beladeschurre als durchgehendes Rohr ausgebildet und durch eine mittels eines Hydraulikzylinders zu betätigende Kniehebelkonstruktion quer zu dem zu beladenden Schiff schwenkbar. Mit der Kniehebelkonstruktion sind wesentlich größere Schwenkwinkel möglich, als mit einem einfachen Hydraulikzylinder. Bei dieser Ausführungsform der Erfin-dung braucht der Ausleger nur noch heb- und senkbar, nicht aber dreh- oder teleskopierbar sein, weil durch das Zusammenwirken der Schwenkbewegung der Beladeschurre, der Hubbewegung des Auslegers sowie der Fahrbewegung des Portals - und somit des gesamten Gerätes - jeder zum Beladen der Schiffsluken anzufahrende Punkt, in der durch Wasserstand und Tiefgang des Schiffes jeweils erforderlichen Abwurfhöhe erreicht werden kann. Hierdurch wird eine wesentliche Vereinfachung der Vorrichtung erzielt.

Zweckmäßigerweise ist die Beladeschurre der erfindungsgemäßen Vorrichtung an ihrem Auslaufende mit einer Verschlußklappe versehen, die durch Federn gegen die Auslauföffnung der Beladeschurre gedrückt wird. Somit kann das Losgut nur gegen den Druck der Feder aus der Beladeschurre austreten und nicht aus der Beladeschurre "herausschießen" und unkontrolliert auf das bereits im Schiffsraum lagernde Losgut aufprallen. Hierdurch wird eine Staubentwicklung weitgehend vermieden.

Die erfindungsgemäße Vorrichtung kann noch dadurch verbessert werden, daß das Auslaufende der Beladeschurre abgeknickt und daß in dem Auslaufende der Beladeschurre ein kurzer Schneckenförderer angebracht ist. Hierbei drückt der Schneckenförderer das Losgut durch die unter dem Druck der Feder stehende Verschlußklappe und öffnet diese nur so weit wie erforderlich, wobei das vor der Verschlußklappe gebildete Materialpolster jegliche Staubentwicklung verhindert.

Eine weitere Verbesserung der erfindungsgemäßen Vorrichtung besteht darin, daß der Bandschleifenwagen mittels eines Hydraulikzylinders verschiebbar ist, um beim Lukenwechsel den Auslegerfreiraum in der angehobenen Stellung zu erreichen.

Ein besonders weitgehender Schutz des Losgutes vor Witterungseinflüssen wird dadurch erreicht, daß das Beschickungsband und der Bandschleifenwagen mit einer Abdeckung versehen sind, wobei die Abdeckung aus einem Gurt bestehen kann, der oberhalb des Beschickungsbandes abgelegt wird.

Die Erfindung ist anhand der Zeichnung, in der ein Ausführungsbeispiele der erfindungsgemäßen Vorrichtung schematisch dargestellt ist, näher erläutert. Es zeigen:
- Fig. 1: eine Vorrichtung in Seitenansicht, wobei mehrere Stellungen der Vorrichtung angedeutet sind;
- Fig. 2: einen Teil der in Fig. 1 dargestellten Vorrichtung in Vorderansicht, in größerem Maßstab;
- Fig. 3: den Ausleger der in Fig. 1 dargestellten Vorrichtung im Querschnitt;
- Fig. 4: die Beladeschurre der in Fig. 1 dargestellten Vorrichtung in Seitenansicht.

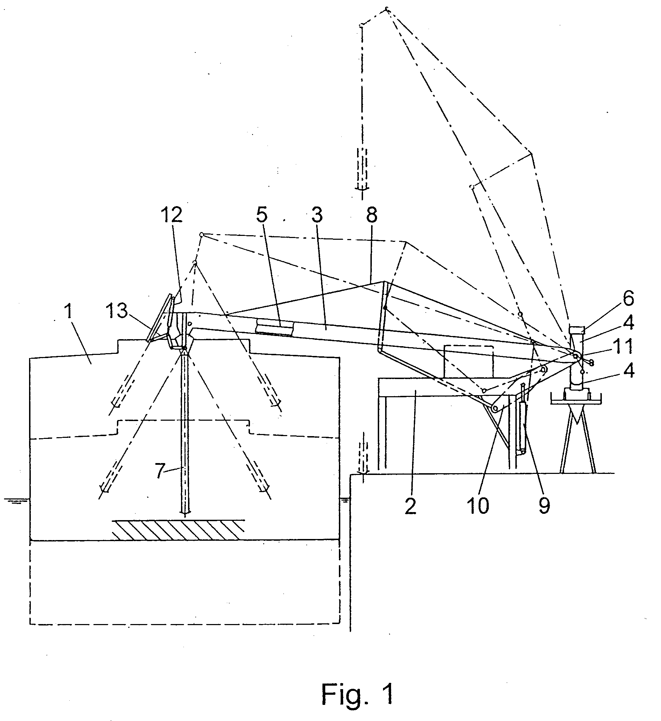

Die in Fig. 1 dargestellte Vorrichtung weist ein parallel zu dem zu beladenen Schiff 1 verfahrbares Portal 2 mit einem darauf angeordneten Ausleger 3 auf. Das Losgut wird von einem Beschickungsband 4 auf das in dem Ausleger 3 verlaufende Auslegerband 5 befördert. Hierzu wird das Beschickungsband 4 mittels eines Bandschleifenwagens 6 bis zur Übergabehöhe des Auslegerbandes 5 angehoben, um das Losgut auf das Auslegerband 5 übergeben zu können. Von dem Auslegerband 5 gelangt das Losgut in eine Beladeschurre 7, von der das Losgut in das Schiff 1 geleitet wird.

Der Ausleger 3, der aus einem mit einer Überspannung 8 versehenen Rohr besteht, ist heb- und senkbar ausgebildet. Das Heben und Senken des Auslegers 3 wird durch einen mittels eines Hydraulikzylinders 9 verstellbaren Kniehebel 10 bewirkt. Der Drehpunkt 11 des Auslegers 3 für dessen Heb- und Senkbewegung ist mittig unter dem Beschickungsband 4 angeordnet.

Die Beladeschurre 7, die ebenfalls als Rohr ausgebildet ist, kann mittels einer durch einen Hydraulikzylinder 12 zu bewegenden Kniehebelkonstruktion 13 quer zu dem zu beladenden Schiff 1 geschwenkt werden.

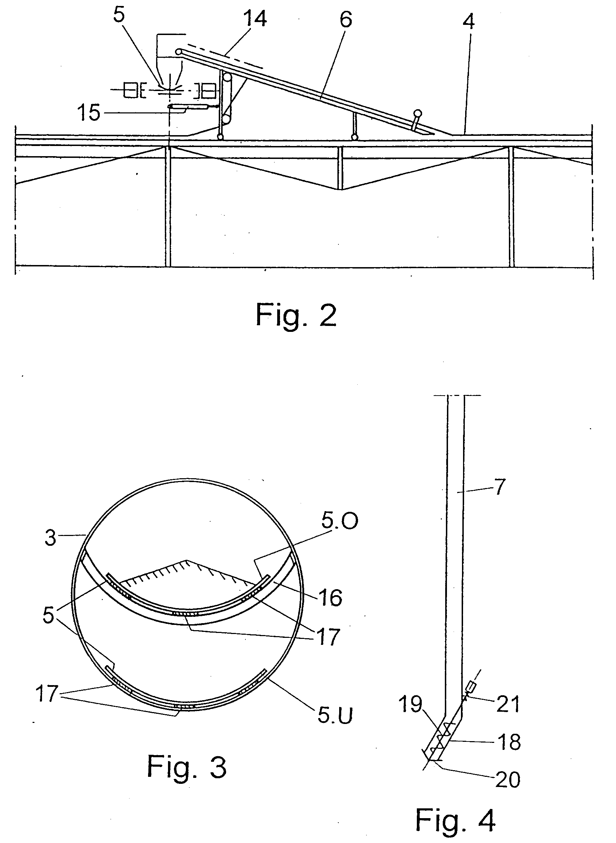

Fig. 2 zeigt den Bandschleifenwagen 6 der Vorrichtung, der das Beschickungsband 4 anhebt, um das Losgut auf das Auslegerband 5 zu übergeben. Das Beschickungsband 4 und der Bandschleifenwagen 6 können mit einer - in der Zeichnung nur angedeuteten - Abdeckung 14 versehen sein. Durch einen Hydraulikzylinder 15 kann der Bandschleifenwagen 6 verschoben werden.

Wie aus Fig. 3 zu ersehen ist, ist in dem Innenraum des Auslegers 3 das als Muldengleitförderer ausgebildete Auslegerband 5 angeordnet. Der Obergurt 5.O des Auslegerbandes 5 stützt sich auf einem in dem Ausleger 3 vorgesehenen Zwischenboden 16 ab, während der Untergurt 5.U des Auslegerbandes 5 auf der Unterseite des Innenraums des Auslegers 3 gleitet. Zwischen dem Obergurt 5.O des Auslegerbandes 5 und dem Zwischenboden 16 sowie zwischen dem Untergurt 5.U des Auslegerbandes 5 und der Unterseite des Innenraums des Auslegers 3 sind austauschbare Gleitleisten 17 angeordnet, die aus Edelstahl oder Kunststoff bestehen können.

Bei der in Fig. 4 dargestellten Beladeschurre 7 ist das Auslaufende 18 abgeknickt. In dem Auslaufende 18 ist ein kurzer Schneckenförderer 19 angebracht. Eine Verschlußklappe 20 wird durch Federn 21 gegen die Auslauföffnung der Beladeschurre 7 gedrückt.

## Patentansprüche

1. Vorrichtung zum Beladen von Schiffen mit Losgut, die ein parallel zu dem Schiff verfahrbares Portal mit einem darauf angeordneten Ausleger aufweist, wobei das Losgut von einem Beschickungsband - das mittels eines Bandschleifenwagens angehoben wird - auf das Auslegerband befördert und von dort über eine Beladeschurre in das Schiff geleitet wird,
**dadurch gekennzeichnet**,
1.1 daß der Ausleger (3) als mit einer Überspannung (8) versehenes Rohr ausgebildet ist,
1.2 daß in dem den Ausleger (3) bildenden Rohr das als Muldengleitförderer ausgebildete Auslegerband (5) angeordnet ist
1.3 und daß der Innenraum des Auslegers (3) mit einem Zwischenboden (16) versehen ist, auf den sich der Obergurt (5.O) des Auslegerbandes (5) abstützt, während der Untergurt (5.U) des Auslegerbandes (5) auf der Unterseite des Innenraums des Auslegers (3) gleitet.

2. Vorrichtung nach Anspruch 1, dadurch gekennzeichnet, daß in dem Innenraum des Auslegers (3) zwischen dem Obergurt (5.O) des Auslegerbandes (5) und dem Zwischenboden (16) einerseits, sowie zwischen dem Untergurt (5.U) und der Unterseite des Innenraums des Auslegers (3) andererseits auswechselbare Gleitleisten (17) vorgesehen sind.

3. Vorrichtung nach Anspruch 1 oder 2, dadurch gekennzeichnet, daß der Ausleger (3) heb- und senkbar ausgebildet ist, wobei das Heben und Senken des Auslegers (3) durch einen mittels eines Hydraulikzylinders (9) verstellbaren Kniehebel (10) bewirkt wird.

4. Vorrichtung nach Anspruch 3, dadurch gekennzeichnet, daß der Drehpunkt (11) des Auslegers (3) für dessen Heb- und Senkbewegung mittig über dem Beschickungsband (4) angeordnet ist.

5. Vorrichtung nach einem der Ansprüche 1 bis 4, dadurch gekennzeichnet, daß die Beladeschurre (7) als durchgehendes Rohr ausgebildet und durch eine mittels eines Hydraulikzylinders (12) zu betätigende Kniehebelkonstruktion (13) quer zu dem zu beladenden Schiff (1) schwenkbar ist.

6. Vorrichtung nach Anspruch 5, dadurch gekennzeichnet, daß die Beladeschurre (7) an ihrem Auslaufende (18) mit einer Verschlußklappe (20) versehen ist, die durch Federn (21) gegen die Auslauföffnung der Beladeschurre (7) gedrückt wird.

7. Vorrichtung nach Anspruch 5 oder 6, dadurch gekennzeichnet, daß das Auslaufende (18) der Beladeschurre (7) abgeknickt und daß in dem Auslaufende (18) der Beladeschurre (7) ein kurzer Schneckenförderer (19) angebracht ist.

8. Vorrichtung nach Anspruch 5, 6 oder 7, dadurch gekennzeichnet, daß der Bandschleifenwagen (6) mittels eines Hydraulikzylinders (15) verschiebbar ist.

9. Vorrichtung nach einem der vorhergehenden Ansprüche, dadurch gekennzeichnet, daß das Beschickungsband (4) und der Bandschleifenwagen (6) mit einer Abdeckung (14) versehen sind, wobei die Abdeckung (14) aus einem Gurt bestehen kann, der oberhalb des Beschickungsbandes (4) abgelegt wird.
